# EUROPÄISCHE PATENTSCHRIFT

(11) **EP 1 066 987 B1**
(45) Veröffentlichungstag und Bekanntmachung des Hinweises auf die Patenterteilung: **30.11.2005**
(21) Anmeldenummer: 00114351.0
(22) Anmeldetag: 05.07.2000
(51) Int. Cl.: B60C 3/04, B60C 13/00

(54) **Fahrzeugluftreifen**
Vehicle tyre
Bandage pneumatique pour véhicule

(30) Priorität: 09.07.1999 DE 19932027
(43) Veröffentlichungstag der Anmeldung: 10.01.2001
(73) Patentinhaber: Continental Aktiengesellschaft, 30165 Hannover (DE)
(72) Erfinder: Metge, Axel, 30179 Hannover (DE); Wies, Burkhard, Dr., 30455 Hannover (DE); Walczok, Mario, 30900 Wedemark (DE); Baumhöfer, Johannes Josef, 30900 Wedemark (DE)

(56) Entgegenhaltungen:
- EP-A- 0 273 558
- EP-A- 0 292 563

## Beschreibung

Die gegenständliche Erfindung betrifft einen Fahrzeugluftreifen mit einem profilierten Laufstreifen, einem insbesondere mehrere Lagen umfassenden Gürtelverband, Wulstbereichen mit Wulstkernen und mit einer ein- oder mehrlagig ausgeführten Karkasse mit zumindest im Wesentlichen radial verlaufenden Festigkeitsträgern, wobei die Karkasse um die Wulstkerne und jeweils als Hochschlag zurück in die Seitenwände verläuft, und wobei im unbelasteten und drucklosen Zustand des Reifens sowie wenn dieser auf einer Felge montiert ist die Auslegung des Verlaufes der Karkasse von der Gleichgewichtsfigur abweicht.

Ein derartiger Reifen ist beispielsweise aus der GB-A 2 024 738 bekannt. Um unerwünschte Deformationen und Spannungen an den Gürtelkanten zu vermeiden wird hier vorgeschlagen, auf bestimmte Weise über die Ausführung der Gürtellagen Einfluss auf den Karkassverlauf im drucklosen bzw. nahezu drucklosen Zustand gegenüber dem Karkassverlauf unter Innendruck zu nehmen.

Im britischen Patent 1 576 409 geht es darum, die Tragfähigkeit eines Fahrzeugluftreifens ohne Einbußen im Komfort oder ohne eine unerwünschte Erwärmung des Reifens in Kauf nehmen zu müssen, zu erhöhen. Dazu wird hier vorgeschlagen, die Seitenwände bzw. die Karkasse mit einer vergleichsweise geringen Krümmung auszulegen und zu verhindern, dass diese unter Innendruck in eine mehr bauchige Form zurückkehrt. Zu diesem Zweck wird der Gürtelverband durch das Vorsehen besonderer Gürtellagen gegenüber Biegemomenten in Umfangsrichtung sehr widerstandsfähig ausgelegt.

Es ist üblich und gehört auch schon seit langem zum Stand der Technik, die Kontur der Karkasse im Reifen, die auch üblicherweise zumindest annähernd der Seitenwandkontur entspricht, bei gegebenem Innendruck in Abhängigkeit von der Karkasslänge in den Seitenwänden zu bestimmen bzw. zu errechnen. Dabei wird auch die Heizform für den Reifen so ausgelegt, dass es möglichst keine Veränderungen der Kontur der Karkasse bzw. der Kontur der Reifenseitenwände, ausgehend von der durch die Heizform bestimmten Kontur bis zu jener Kontur, die der Reifen im montierten Zustand unter Innendruck einnimmt, gibt. Bei einer derartigen Auslegung spricht man davon, dass die Karkasse gemäß ihrer Neutralen ausgelegt ist. Damit sollen unnötige Spannungen im Reifen durch etwaige Gestaltsveränderungen vermieden werden. Im Laufstreifenbereich besitzen Reifen ferner üblicherweise eine in Querrichtung gekrümmte Kontur, damit beim Einfedern unter Innendruck und Belastung die innerhalb der Fahrfläche, des bodenberührenden Bereiches, des Reifens, wirkenden Aufstandsdrücke möglichst ausgeglichen sind, was zur Kraftübertragung und zum Aufbau der gewünschten Tragfähigkeit erforderlich ist. Diese Krümmung wird, wie auch die Krümmung der Karkasse in den Seitenwandbereichen, von der Reifenform vorgegeben, sie ist aber am Fertigprodukt auch vom konstruktiven Aufbau der festigkeitsgebenden Elemente, Festigkeitsträger im Gürtel und in der Karkasse, abhängig.

Bei einer neutralen Auslegung der Karkasskontur ergibt sich nun oft im abgeplatteten Zustand ein Karkassverlauf, wo die Kräfte, die durch den Innendruck hervorgerufen werden, relativ stark in die Schulterbereiche der Bodenaufstandsfläche übertragen werden. Die Aufstandsdruckverteilung innerhalb der Fahrfläche ist daher nicht mehr im erwünschten Ausmaß ausgeglichen, was eine Reihe von Reifeneigenschaften, beispielsweise den Abrieb, die Geräuschentwicklung, das Fahr- und Bremsverhalten auf nassen und trockenen Fahrbahnen, beeinträchtigen kann.

Eine Anzahl von zum Patent angemeldeten oder durch Patente geschützte Ideen befasst sich mit einer optimalen Auslegung der Außenkontur von Fahrzeugluftreifen, beispielsweise die EP-A1 0 269 301, und auch mit Maßnahmen, durch die der Druck des Reifens in der Bodenaufstandsfläche und/oder die Kontur der Bodenaufstandsfläche selbst beeinflusst werden sollen, insbesondere um den Rollwiderstand zu senken oder einen gleichmäßigeren Abrieb zu erzielen. Diesbezüglich wird beispielsweise auf die EP-B1 0 323 519 verwiesen. Die bekannten Maßnahmen setzen dabei meist bei einer Auslegung der Krümmung des Reifens im Laufstreifenbereich an.

Die Erfindung hat sich nun die Aufgabe gestellt, die erwünschten ausgeglichenen Aufstandsdruckverhältnisse innerhalb des bodenberührenden Teiles des Reifens, der Fahrfläche, durch Maßnahmen an der Auslegung der Karkasse zu erreichen, um insbesondere das Bremsverhalten auf nassen und trockenen Fahrbahnen, die Geräuschentwicklung und das Abriebsverhalten positiv zu beeinflussen.

Gelöst wird die gestellte Aufgabe erfindungsgemäß dadurch, dass die Karkasse jeweils im Bereich zwischen ihrer Anbindungsstelle zum Gürtel und ihrer Anbindungsstelle zur Felge in einer Länge ausgeführt ist, die kürzer ist als die sich zwischen diesen Stellen ergebende theoretische Länge der Karkasse gemäß der Gleichgewichtsfigur.

Die gemäß der gegenständlichen Erfindung getroffene Maßnahme wirkt sich ausgesprochen günstig auf die erwünschten ausgeglichenen Druckverhältnisse in der Bodenaufstandsfläche des Reifens aus. Die kürzere Karkasse verringert in den Schulterbereichen das Ausmaß der Übertragung von durch den Reifeninnendruck wirkenden Kräfte und bewirkt somit eine Vergleichmäßigung der Druckverhältnisse in der Aufstandsfläche. Unter Innendruck werden nämlich die Reifenseitenwände so verformt, dass der Reifen gegenüber dem drucklosen Zustand breiter wird und im Zenitbereich etwas wächst und so gegen ein Wachstum in den Gürtelkantenbereichen wirkt, insbesondere sogar eine Verringerung des Abstandes der Gürtelkanten zum Wulst erfolgt.

Die Auslegung wird dabei insbesondere so getroffen, dass die Länge der Karkasse zwischen den beiden Anbindungsstellen 80 bis 97 %, insbesondere 85 bis 95 %, der in diesen Bereichen gemäß der Gleichgewichtsfigur ermittelten theoretischen Länge entspricht. Gerade innerhalb dieser Bereiche lässt sich eine möglichst ausgeglichene Druckverteilung in der Bodenaufstandsfläche des Reifens erzielen.

In diesem Zusammenhang ist es auch von Vorteil, wenn im drucklosen, unbelasteten und montierten Zustand des Reifens der mittlere Radius der Karkasse größer ist als der mittlere Radius einer gemäß der Gleichgewichtsfigur ausgelegten Karkasse. Dies entspricht einer "geraderen" Auslegung des Karkassverlaufes.

Erfindungsgemäß ausgeführte Reifen werden bevorzugt gleichzeitig so gestaltet, dass die für verschiedene Reifeneigenschaften ungünstigen, wechselnden Zug- und Druckspannungen in den Hochschlägen der Karkasse vermieden werden können. Dazu ist vorgesehen, dass im drucklosen, unbelasteten und auf einer Felge montierten Zustand des Reifens, die Karkasse im Bereich zwischen der Anbindungsstelle zum Gürtel und der Stelle mit der größten Querschnittsbreite einen Radius bzw. mehrere Radien aufweist, die sämtlich kleiner sind als der Radius bzw. die Radien in jenen Bereichen der Karkasse, die jeweils zwischen der Stelle mit der größten Querschnittsbreite und der Anbindungsstelle zur Felge verlaufen.

Beim Abrollen des Reifens unter Last wirken daher in den Hochschlägen der Karkasse nur mehr schwankende Zugspannungen, für deren Größe und Verteilung über den Hochschlag der Karkasse es günstig ist, wenn im drucklosen, unbelasteten und montierten Zustand des Reifens das Verhältnis des kleinsten Radius der Karkasse zum größten Radius der Karkasse zwischen 1:1,1 und 1:2,2, insbesondere zwischen 1:1,4 und 1:2,0, beträgt.

Für die optimale Verteilung der schwankenden Druckspannungen im Bereich des Karkasshochschlages ist es dabei günstig, wenn im drucklosen, unbelasteten und montierten Zustand des Reifens der Radius der Karkasse im Bereich der Anbindungsstelle zum Gürtel am kleinsten, im Bereich der Anbindungsstelle zur Felge am größten ist, wobei sich zwischen diesen beiden Stellen der Radius der Karkasse kontinuierlich vergrößert.

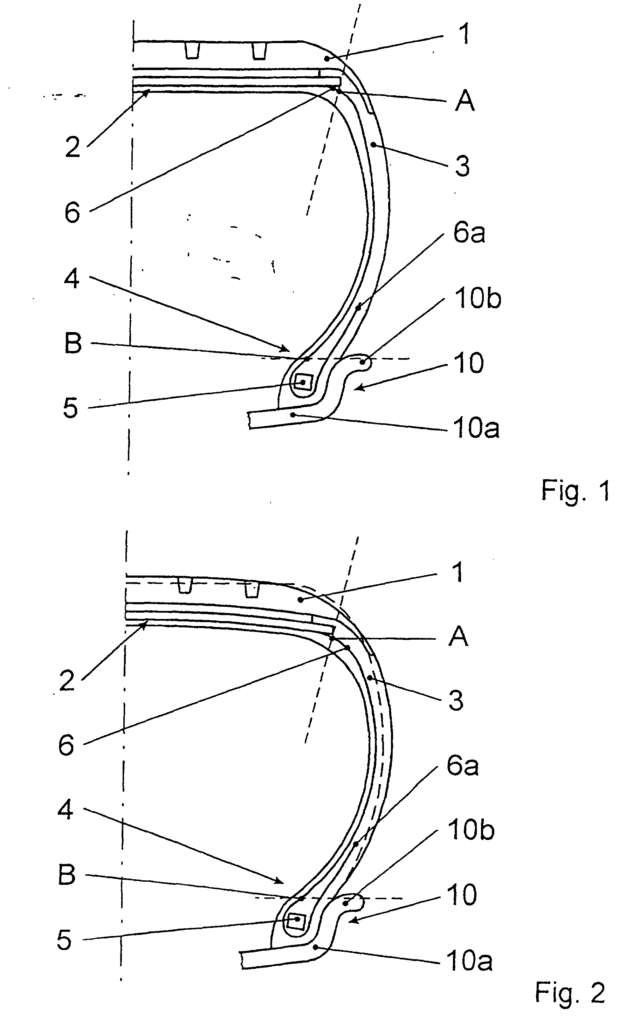

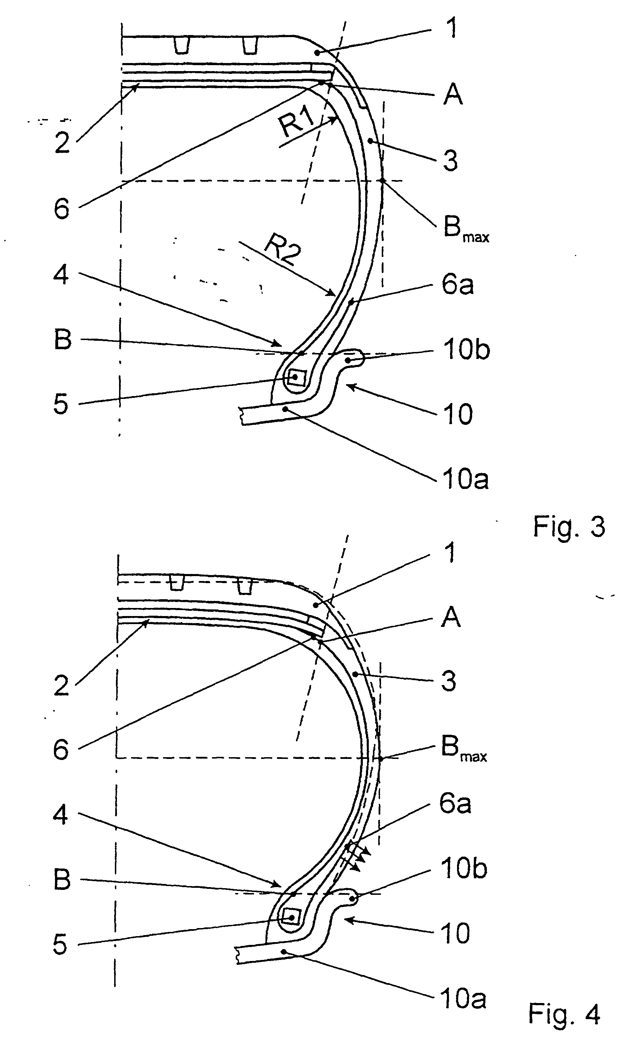

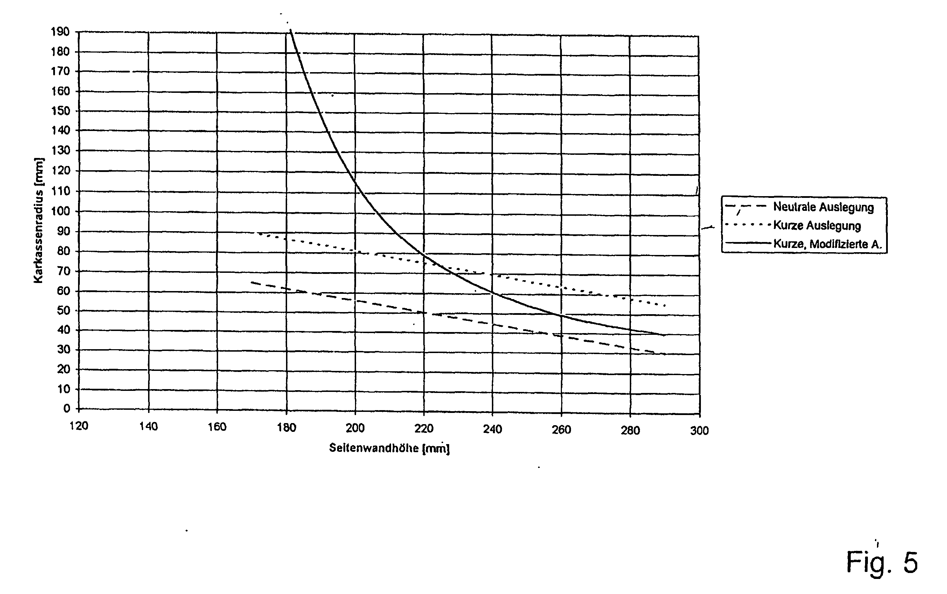

Weitere Merkmale, Vorteile und Einzelheiten der Erfindung werden nun anhand der Zeichnung, die Ausführungsbeispiele darstellt, näher beschrieben. Dabei sind Fig. 1 und Fig. 2 sowie Fig. 3 und 4 jeweils schematische Darstellungen von Querschnitten durch Hälften von Fahrzeugluftreifen, Fig. 1 und Fig. 3 zeigen dabei den auf eine Felge montierten Reifen im drucklosen und unbelasteten Zustand, Fig. 2 und Fig. 4 den auf eine Feige montierten, unbelasteten Reifen unter Innendruck (Nenndruck gemäß E.T.R.T.O Standards), Fig. 5 ist ein Diagramm, welches den Verlauf des Karkassradius über die Seitenwandhöhe für einen nach den Stand der Technik und für erfindungsgemäß ausgeführte Reifen zeigt.

Die in Fig. 1 bis Fig. 4 im Querschnitt dargestellten Fahrzeugluftreifen sind für Personenkraftwagen vorgesehene Reifen in Radialbauart. Die Erfindung ist jedoch auf diesen Reifentyp nicht eingeschränkt und gleichermaßen auch bei Nutzfahrzeugreifen realisierbar.

Der in Fig. 1 bis Fig. 4 dargestellte Reifen ist auf einer Felge 10, von der lediglich die Wulstsitzfläche 10a und das Felgenhorn 10b dargestellt sind, angeordnet und weist einen profilierten Laufstreifen 1, einen Gürtelverband 2, Seitenwände 3, Wulstbereiche 4 mit Wulstkernen 5 und eine Radialkarkasse 6 auf. Der Gürtelverband 2 kann in herkömmlicher Art und Weise aufgebaut sein und wird daher insbesondere mehrere Gürtellagen mit einer kreuzenden Anordnung von Fertigkeitsträgern und gegebenenfalls auch eine Gürtelbandage als radial äußerste Lage mit in Reifenumfangsrichtung verlaufenden Fertigkeitsträgern umfassen. Bei den dargestellten Ausführungsbeispielen ist ferner die Karkasse 6 einlagig ausgeführt und besteht aus in eine Kautschuk- bzw. Gummimatrix eingebetteten und zumindest im Wesentlichen in radialer Richtung verlaufenden Festigkeitsträgern, vorzugsweise aus einem textilen Material. Die Karkasse 6 kann daher in herkömmlicher Art und Weise aufgebaut sein und selbstverständlich auch mehr als eine Lage umfassen. In den Wulstbereichen 5 ist die Karkasse 6 von innen nach außen um die Wulstkerne 5 herumgeführt und wieder in die Seitenwandbereiche rückgeführt. Die beiden rückgeführten Bereiche der Karkasse 6 bilden jeweils den Karkasshochschlag 6a.

Gemäß der gegenständlichen Erfindung ist nun die Länge jener Bereiche der Karkasse 6, die in den Seitenwänden verlaufen, besonders ausgelegt bzw. gewählt. Nach dem Stand der Technik ist es üblich, die Kontur der Karkasse in den Reifenseitenwänden so auszulegen, dass sie ihrer Neutralen folgt und daher gemäß der Gleichgewichtsformel ausgelegt ist. Bei einer derartigen Auslegung der Karkasse bzw. Reifenseitenwandkontur ist auch die Heizform für den Reifen im Bereich der Seitenwandschalen von ihrer Form bzw. Kontur so ausgelegt, dass möglichst keine Änderung der Karkassen-Kontur in den Seitenwänden und damit der Reifenseitenwandkontur ausgehend von der Kontur in der Heizform bis zur Kontur des Reifens unter Innendruck auftritt. Dadurch sollen unnötige Spannungen im Reifen, die durch Änderungen der Reifengestalt auftreten könnten, vermieden werden.

Eine erfindungsgemäß ausgelegte Karkasse 6 ist in den Seitenwänden 3 kürzer ausgeführt als es ihrer Länge nach der neutralen Auslegung gemäß der Gleichgewichtsformel bzw. Gleichgewichtsfigur entsprechen würde und wird von der Heizform des Reifens her mit einem wesentlich geraderen Verlauf versehen. Letzterer ist aus Fig. 1, wo der drucklose Zustand des Reifens dargestellt ist, ersichtlich. Die gegenüber der Gleichgewichtsfigur verkürzte Länge der Karkasse 6 wird zwischen zwei Stellen A und B eingestellt. Dabei ist A quasi die Anbindungsstelle der Karkasse 6 zum Gürtel 2. Im Reifenquerschnitt ergibt sich A als Schnittpunkt einer von der Gürtelkante zum Reifenmittelpunkt gezogenen Geraden mit der Karkasse 6. B ist die Anbindungsstelle der Karkasse 6 zur Felge 10 und ergibt sich aus dem Schnittpunkt einer zur Reifenachse parallelen und durch die radial äußerste Berührungsstelle des Wulstbereiches mit der Felge 10 verlaufenden Geraden mit der Karkasse 6.

Zwischen den Anbindungsstellen A und B ist die Länge der Karkasse 6 zwischen 80 % und 97 %, insbesondere zwischen 85 und 95 %, der sich rechnerisch ergebenden, entsprechenden Länge der Karkasse 6 in diesen Bereichen gemäß der Gleichgewichtsfigur (Gleichgewichtsformel) gewählt.

Zugleich wird die Karkasse 6 im drucklosen, unbelasteten und montiertem Zustand des Reifens im Querschnitt mit einem relativ großen Radius ausgeführt, wobei in jedem Fall der mittlere Radius der Karkasse 6 größer ist als der mittlere Radius einer gemäß der Gleichgewichtsfigur ausgelegten Karkasse.

Eine Auslegung der Karkasse 6 gemäß der gegenständlichen Erfindung ergibt unter Innendruck und im unter Last abgeplatteten Zustand des Reifens einen Verlauf der Karkasse 6, wo die Kräfte, die durch den Innendruck hervorgerufen werden, in den Schulterbereichen der Bodenaufstandsfläche weniger stark übertragen werden als es bei einer Auslegung nach der Gleichgewichtsfigur der Fall wäre. Wie Fig. 2 zeigt, wo die strichlierte Linie die Außenkontur des Reifens aus Fig. 1 (druckloser Zustand) wiedergibt, wird unter Innendruck der Reifen sowohl im Laufstreifenbereich als auch im Bereich der Seitenwände nach außen in eine rundere Kontur verformt, dadurch auch breiter, wobei die Länge der Gürtelkanten gegenüber dem drucklosen Zustand zumindest gleich bleibt, insbesondere aber hier sogar eine Verringerung des Abstandes der Gürtelkanten zur Reifenachse stattfindet. Im Zenitbereich wächst der Reifen in radialer Richtung. Die Druckverteilung in der gesamten Bodenaufstandsfläche des Reifens wird somit gleichmäßiger als bei einer Auslegung der Karkasse nach der Gleichgewichtsfigur bzw. der Gleichgewichtsformel.

Beim Abrollen eines Reifens unter Innendruck und Belastung werden die Hochschläge 6a der Karkasse 6 wechselnden Zug- und Druckspannungen ausgesetzt. Es ist bekannt, dass diese Belastungen zu unerwünschten Beeinflussungen von verschiedenen Reifeneigenschaften oder auch zu frühzeitigen Wulstschäden führen können.

Um diese Spannungen in den Wulstbereichen abzubauen, wird der Verlauf der Karkasse 6 so ausgelegt, dass, im drucklosen Zustand des Reifens und wenn dieser auf einer Felge montiert ist, die Karkasse 6 im unteren Seitenwandbereich flacher, demnach mit größerem Radius ausgeführt wird als im oberen Seitenwandbereich, um durch die Verformung unter Innendruck gezielt eine Vorspannung mit nach außen wirkenden Zugspannungen im Hochschlag 6a der Karkasse 6 zu erzeugen. Damit wird erreicht, dass der Hochschlag 6a der Karkasse 6 beim Wechsel vom eingefederten in den nicht eingefederten Zustand während des Abrollens des Reifens im Wesentlichen nur mehr schwankenden Zugspannungen unterworfen wird.

Fig. 3 und Fig. 4 zeigen eine mögliche Ausführung der diesbezüglichen Auslegung des Verlaufes der Karkasse 6, bei der im drucklosen Zustand (Fig. 3) jeweils zwischen einer der beiden Anbindungsstellen A, B, die wie oben definiert sind, und der Stelle Bₘₐₓ, welche die Stelle mit der größten Querschnittsbreite ist, im Wesentlichen je ein Radius R₁, R₂ gewählt wird. Der Radius R₁ ist zumindest über den größten Teil der Länge der Karkasse 6 zwischen A und Bₘₐₓ und der Radius R₂ zumindest über den größten Teil der Länge der Karkasse 6 zwischen Bₘₐₓ und B gegeben. Dabei ist R₁ < R₂, insbesondere beträgt das Verhältnis der Radien R₁ zu R₂ zwischen 1:1,1 und 1:2,2, insbesondere zwischen 1:1,4 und 1:2,0.

Eine optimale Auslegung sieht vor, dass im drucklosen Zustand beim Wulst im Bereich der Stelle B der größte Radius der Karkasse 6, im Bereich der Stelle A bei der Gürtelkante der kleinste vorliegt und zwischen den Stellen A und B sich der Radius der Karkasse 6, und bei der üblichen Anordnung auch der der Seitenwand 3, kontinuierlich vergrößert.

Fig. 5 zeigt den Verlauf des Karkassradius über der Seitenwandhöhe, wobei entlang der x-Achse die Reifenhöhe in Millimeter und entlang der y-Achse der Radius der Karkasse 6, ebenfalls in Millimeter, angegeben ist. Die punktierte, im Wesentlichen gerade verlaufende Linie zeigt den Sachverhalt bei einem nach dem Stand der Technik ausgeführten Reifen, wo der Verlauf der Karkasse gemäß der Neutralen, demnach gemäß der Gleichgewichtsformel, ausgelegt ist. Die durchgezogene Linie zeigt den Verlauf bei einer, wie oben ausgeführt, kurz ausgelegten Karkasse. Die strichlierte Linie zeigt die Verhältnisse bei einer Karkasse, die sowohl kurz ausgelegt ist und bei der auch der Radius ausgehend von der Stelle A bis zur Stelle B kontinuierlich größer wird.

Unter Innendruck (Fig. 4) stellt sich wieder eine Gleichgewichtskontur ein, was, wie Fig. 4 zeigt, zur Folge hat, dass sich die Reifenseitenwände so verformen, dass sich die Stelle mit der größten Querschnittsbreite Bₘₐₓ in Richtung Wulst verlagert und der Radius bzw. die Radien im Bereich zwischen B max und der Stelle A größer, jener bzw. jene zwischen B max und der Stelle B kleiner wird bzw. werden. Damit stellt sich ein annähernd konstanter Radius über den Verlauf der Karkasse 6 zwischen A und B ein. Dies erzeugt die erwünschten, vom Reifen nach außen wirkenden schwankenden Zugspannungen im Karkasshochschlag 6a, was in Fig. 4 durch den Pfeil angedeutet ist.

Bei der erfindungsgemäßen Auslegung der Kontur der Karkasse 6 ist es günstig, wenn über die Reifenform keine weiteren Maßnahmen zur Beeinflussung der Krümmung der Lauffläche getroffen werden, um unerwünschte Auswirkungen auf bestimmte Reifeneigenschaften, beispielsweise Abrieb und Rollwiderstand, zu vermeiden. Im Rahmen der gegenständlichen Erfindung ist es von Vorteil, wenn die Laufflächenkrümmung vergleichsweise flach gewählt wird und eine entsprechende Krümmung mit einem oder mit zwei Radien vorgenommen wird.

## Patentansprüche

1. Fahrzeugluftreifen mit einem profilierten Laufstreifen (1) einem insbesondere mehrere Lagen umfassenden Gürtelverband (2), Wulstbereichen (4) mit Wulstkernen (5) und mit einer ein- oder mehrlagig ausgeführten Karkasse (6) mit zumindest im Wesentlichen radial verlaufenden Festigkeitsträgern, wobei die Karkasse um die Wulstkerne und jeweils als Hochschlag zurück in die Seitenwände verläuft und wobei im unbelasteten und drucklosen Zustand des Reifens sowie wenn dieser auf einer Felge montiert ist die Auslegung des Verlaufes der Karkasse von der Gleichgewichtsfigur abweicht, **dadurch gekennzeichnet, dass** die Karkasse (6) jeweils im Bereich zwischen ihrer Anbindungsstelle (A) zum Gürtel (2) und ihrer Anbindungsstelle (B) zur Felge (10) in einer Länge ausgeführt ist, die kürzer ist als die sich zwischen diesen Stellen (A, B) ergebende theoretische Länge der Karkasse (6) gemäß der Gleichgewichtsfigur.

2. Fahrzeugluftreifen nach Anspruch 1, **dadurch gekennzeichnet, dass** die Länge der Karkasse (6) zwischen den beiden Anbindungsstellen (A, B) 80 bis 97 %, insbesondere 85 bis 95 %, der in diesen Bereichen gemäß der Gleichgewichtsfigur ermittelten theoretischen Länge entspricht.

3. Fahrzeugluftreifen nach Anspruch 1 oder 2, **dadurch gekennzeichnet, dass** im drucklosen, unbelasteten und montierten Zustand des Reifens der mittlere Radius der Karkasse (6) größer ist als der mittlere Radius einer gemäß der Gleichgewichtsfigur ausgelegten Karkasse.

4. Fahrzeugluftreifen nach Anspruch 1 oder 2, **dadurch gekennzeichnet, dass** im drucklosen, unbelasteten und auf einer Felge montierten Zustand des Reifens die Karkasse (6) im Bereich zwischen der Anbindungsstelle (A) zum Gürtel (2) und der Stelle (Bₘₐₓ) mit der größten Querschnittsbreite einen Radius bzw. mehrere Radien aufweist, die sämtlich kleiner sind als der Radius bzw. die Radien in jenen Bereichen der Karkasse (6), die jeweils zwischen der Stelle (Bₘₐₓ) mit der größten Querschnittsbreite und der Anbindungsstelle (B) zur Felge (10) verlaufen.

5. Fahrzeugluftreifen nach Anspruch 4, **dadurch gekennzeichnet, dass** im drucklosen, unbelasteten und montierten Zustand des Reifens das Verhältnis des kleinsten Radius der Karkasse (6) zum größten Radius der Karkasse zwischen 1:1,1 und 1:2,2, insbesondere zwischen 1:1,4 und 1:2,0, beträgt.

6. Fahrzeugluftreifen nach Anspruch 4 oder 5, **dadurch gekennzeichnet, dass** im drucklosen, unbelasteten und montierten Zustand des Reifens der Radius der Karkasse (6) im Bereich der Anbindungsstelle (A) zum Gürtel (2) am kleinsten, im Bereich der Anbindungsstelle (B) zur Felge (10) am größten ist, und dass sich zwischen diesen beiden Stellen (A, B) der Radius der Karkasse (6) kontinuierlich vergrößert.

## Claims

1. Pneumatic vehicle tyre having a profiled tread (1), a belt binding (2) which comprises in particular a plurality of layers, bead regions (4) having bead cores (5) and a carcass (6), constructed as a single layer or a multilayer, with at least essentially radially extending reinforcing elements, the carcass extending around the bead cores and in each case back into the side walls as a turnup, and in which case in the unloaded and pressureless state of the tyre and when the tyre is mounted on a rim the configuration of the profile of the carcass deviates from the balanced shape, **characterized in that** the carcass (6) is constructed in each case in the region between its connecting point (A) to the belt (2) and its connecting point (B) to the rim (10) so as to have a length which is shorter than the theoretical length of the carcass (6) resulting between these points (A, B) according to the balanced shape.

2. Pneumatic vehicle tyre according to Claim 1, **characterized in that** the length of the carcass (6) between the two connecting points (A, B) is 80 to 97% in particular 85 to 95%, of the theoretical length which is determined in these regions according to the balanced shape.

3. Pneumatic vehicle tyre according to Claim 1 or 2, **characterized in that** in the pressureless, unloaded and mounted state of the tyre the central radius of the carcass (6) is greater than the central radius of a carcass which is configured according to the balanced shape.

4. Pneumatic vehicle tyre according to Claim 1 or 2, **characterized in that** in the pressureless, unloaded state of the tyre in which it is mounted on a rim, the carcass (6) has, in the region between the connecting point (A) to the belt (2) and the point (Bₘₐₓ) with the largest cross sectional width, a radius or a plurality of radii which are all smaller than the radius or the radii in those regions of the carcass (6) which each extend between the point (Bₘₐₓ) with the greatest cross-sectional width and the connecting point (B) to the rim (10).

5. Pneumatic vehicle tyre according to Claim 4, **characterized in that** in the pressureless, unloaded and mounted state of the tyre, the ratio of the smallest radius of the carcass (6) to the largest radius of the carcass is between 1:1.1 and 1:2.2, in particular between 1:1.4 and 1:2.0.

6. Pneumatic vehicle tyre according to Claim 4 or 5, **characterized in that** in the pressureless, unloaded and mounted state of the tyre, the radius of the carcass (6) is smallest in the region of the connecting point (A) to the belt (2) and largest in the region of the connecting point (B) to the rim (10), and **in that** the radius of the carcass (6) increases continuously between these two points (A, B).

## Revendications

1. Pneumatique pour véhicule, qui présente :
une bande de roulement profilée (1),
un assemblage de ceinture (2) qui comprend en particulier plusieurs couches,
des zones (4) en bourrelet dotées de noyaux de bourrelet (5) et
une carcasse (6) en une ou en plusieurs couches, dotée de supports de rigidité qui s'étendent au moins essentiellement dans la direction radiale,
la carcasse s'étendant autour des noyaux de bourrelet et revenant chaque fois comme un col dans les parois latérales, le mode de réalisation du parcours de la carcasse (6) s'écartant de la figure d'équilibre lorsque le pneu n'est pas sollicité et ne subit pas de pression et lorsqu'il est monté sur une jante,
**caractérisé en ce qu'**entre l'emplacement (A) de sa liaison à la ceinture (2) et l'emplacement (B) de sa liaison à la jante (10), la carcasse (6) présente une longueur chaque fois inférieure à la longueur théorique que l'on obtient entre ces emplacements (A, B) dans le cas de la carcasse (6) dans la figure d'équilibre.

2. Pneumatique pour véhicule selon la revendication 1, **caractérisé en ce que** la longueur de la carcasse (6) entre les deux emplacements de liaison (A, B) représente entre 80 et 97 % et en particulier à entre 85 et 95 % de la longueur obtenue dans ces zones dans la figure d'équilibre.

3. Pneumatique pour véhicule selon les revendications 1 ou 2, **caractérisé en ce que** lorsque le pneu n'est pas sollicité, ne subit pas de pression et est monté, le rayon central de la carcasse (6) est plus grand que celui d'une carcasse réalisée selon la figure d'équilibre.

4. Pneumatique pour véhicule selon les revendications 1 ou 2, **caractérisé en ce que** lorsque le pneu n'est pas sollicité, ne subit pas de pression et est monté sur une jante, la carcasse (6) présente entre l'emplacement (A) de sa liaison à la ceinture (2) et l'emplacement (Bₘₐₓ) de sa plus grande section transversale un ou plusieurs rayons qui sont tous plus petits que le ou les rayons situés dans toute zone de la carcasse (6) qui s'étend entre l'emplacement (Bₘₐₓ) de sa plus grande section transversale et l'emplacement (B) de sa liaison à la jante (10).

5. Pneumatique pour véhicule selon la revendication 4, **caractérisé en ce que** lorsque le pneu n'est pas sollicité, ne subit pas de pression et est monté, le rapport entre le plus petit rayon et le plus grand rayon de la carcasse (6) est compris entre 1 : 1,1 et 1 : 2,2 et en particulier entre 1 : 1,4 et 1 : 2,0.

6. Pneumatique pour véhicule selon les revendications 4 ou 5, **caractérisé en ce que** lorsque le pneu n'est pas sollicité, ne subit pas de pression et est monté, le plus petit rayon de la carcasse (6) est situé dans la zone de l'emplacement (A) de sa liaison à la ceinture (2) et son plus grand rayon est situé dans la zone de l'emplacement (B) de sa liaison à la jante (10) et **en ce que** le rayon de la carcasse (6) croît de façon continue entre ces deux emplacements (A, B).
